# EUROPEAN PATENT APPLICATION

(11) **EP 1 586 543 A1**
(43) Date of publication of application: **19.10.2005**
(21) Application number: 04101526.4
(22) Date of filing: 14.04.2004
(51) Int. Cl.: C03C 1/02

(54) **Reduction of selenium burn off in glass making**

(71) Applicant: GLAVERBEL, 1170 Bruxelles (BE)
(72) Inventor: The designation of the inventor has not yet been filed
(74) Representative: Farmer, Guy Dominic

(57) **Abstract**

A concentrated raw material component comprising Se and Fe on a carrier is added to a glass batch in order to reduce Se bum off during the melt of the composition.

## Description

This invention relates to concentrate raw materials for the preparation of glass. In particular, it relates to concentrate raw materials for the preparation of Se comprising glass with reduced Se burn off and to methods for the same. More particularly, the invention relates also to concentrated raw materials that can be incorporated to a batch mixture of components suitable for glass melting manufacturing processes.

Especially, the invention also relates to concentrated raw materials and to methods for the preparation of glasses that contain a high proportion of Selenium, for example, but not exclusively grey and coloured glasses in which Se is a main colour active ingredient.

It is known for a long time that Se has a low boiling point and volatilises at a high rate during the melting of glass (US-3,291,585-A, col. 1, lines 9-40). It is therefore generally necessary to charge Se into a glass melting furnace in an amount up to about 200 times the amount that is targeted in the final glass obtained, the remaining major amount introduced being lost in the furnace gaseous exhaust.

Despite the generally low quantities of Se used in glasses (about a few ppm in weight up to, at the very most, about 0.5 %), the high price of that element and its environmental non-compliance is a serious drawback to endure when presence of Se is mandatory in a glass formula.

According a first aspect, the invention provides a concentrated raw material component for the preparation of a glass as defined in Claim 1.

According to a second aspect, the invention provides a Se comprising glass according to Claim 10.

According to a third aspect, the invention provides a method of reducing Se burn off in a Se comprising glass making process according to Claim 11.

According to a fourth aspect, the invention provides a method of increasing the Se yield in the manufacture of a Se comprising glass as defined in Claim 21.

According to a fifth aspect, the invention provides a method of manufacturing a high Se glass according to Claim 22.

According to a sixth aspect, the invention provides a high Se glass batch composition as defined in Claim 23.

Dependent claims define further preferred embodiments of the invention.

The present invention may provide one or more of the following advantages:
- substantial reduction of the Se raw materials costs by significantly conserving Se and improving its yield;
- relief of the environmental burden associated with cleaning of disposals;
- access to new high Se glass formulae;
- simplicity of incorporation of the Se, like any other traditional glass component;
- no requirement for any special and/or particularly expensive dispenser or dosing equipment for the incorporation of the Se component.

The concentrated raw material component comprises several elements, which can be found in known batch compositions. It further comprises at least a source of selenium, a source of iron and a solid carrier. According to the invention, the sources of Se and of Fe have been combined with that carrier. By combination, it is not necessarily intended a chemical reaction, a mere physical association, or even adherence of both sources particles onto particles of the carrier being sufficient.

The source of Fe, expressed as Fe₂O₃, amounts in the concentrated component to at least 0.1 % of the total weight of that component. Preferably, the source of Fe amounts in this component to at least 0.05 wt.% of Fe₂O₃. Generally, no more than 60 % of the weight of the concentrated component is under the form of the iron, expressed as Fe₂O₃. Preferably, no more than 35 wt.% of the weight of the concentrated component is under the form of Fe expressed as Fe₂O₃.

In the concentrated component, the Fe source may have been selected from compounds like Fe₂O₃ (Rouge) and/or a salt of Fe at varied oxidation stages. By varied oxidation stages of Fe, it has been intended to designate at least three different stages: *0* like in elemental Fe, *2*^{*+*} like in FeSe and *3*^{*+*} like in Rouge. Rouge and mixtures of Rouge with other Fe comprising compounds were generally preferred as source of Fe. A source of Fe consisting essentially of Rouge alone has most often been used. Solid particles comprising at least one of the previous Fe sources were generally preferred. Most preferred were the particles similar in size and shape to the ones of the other components of a traditional glass batch composition.

The source of Se amounts in the concentrated component to at least 0.020 %, expressed as Se, of the total weight of the concentrated component. Preferably, the source of Se amounts in this component to at least 0.025 wt.%, expressed as Se. More preferred in the concentrated component, the Se source is present in at least 0.030 wt.%, expressed as Se.

The Se source in the concentrated component may have been selected from compounds like elemental Se, a Se salt at varied Se oxidation stages and the compound FeSe, the latter designating alloys of Fe with Se as well as a chemical compound or even simple mixtures of elemental Fe and Se. By varied oxidation stages of Se, one has intended to designate at least four different stages: *2* like in FeSe, *0* like in elemental Se, *4*^{*+*} like in Na₂SeO₃ and *6*^{*+*} like in Na₂SeO₄. Most generally preferred as Se source has been elemental Se. FeSe has been frequently used also, as it is contributing to the addition of a Fe source as well. Non-limitative examples of Se salts that may have been used were: Na₂SeO₃, Na₂SeO₄, CaSeO₃, BaSeO₃, ZnSeO₄ and CoSe. Amongst Se salts, sodium or zinc salts are generally preferred. Na₂SeO₃, Na₂SeO₄ and ZnSeO₄ have given good results. Like above in the event of a Fe source, solid particles comprising at least one of the previous Se sources were preferred. Most preferred, however, were the particles similar in size and shape to the ones of the other components of the traditional glass batch composition.

According to a particular embodiment of the invention, the Fe and Se sources may have been combined with the solid carrier in a sintered material. By sintered material, it is intended a frit material obtained by agglomeration under heating of the solid carrier particles together with the particles of the Fe and Se sources. In that sintering process, the particles of carrier and of Fe and Se sources have been heated under mixing up to a temperature and for a duration, which were sufficient to start the fusion of a thin layer on the outer surface of at least the carrier particles. The mixture has then been allowed to cool down while Fe and Se particles have stuck progressively to particles of carrier. Conditions of temperature and duration have had to be carefully adapted to the particular melting properties of the carrier particles.

According to another particular embodiment of the invention, the Fe and Se sources may have been combined with the solid carrier in a glass, which encapsulates the Se and Fe sources. In that embodiment, the carrier has been a glass, which has been allowed to completely melt under stirring with the Fe and Se particles. After gentle cooling, the latter Fe and Se particles have stood encapsulated in the solidified carrier glass. Depending of the intensity of the stirring, one may have end with pellets of glass concentrated component, which are more or less high in size. The glass of the carrier need not be of similar composition as the final comprising Se glass. The only requirement to its composition was to have been carefully computed so as to produce the desired final glass composition after admixing with a glass batch of reduced content in Fe and Se. Alternatively, the latter glass batch may as well comprise no Fe and /or no Se at all.

In this regard, the solid carrier may have comprised varying compounds that are compatible and sometimes found in varied qualities of glasses. Such compounds may non limitatively comprise: SiO₂, Na₂O, K₂O, Li₂O, B₂O₃, CaO, MgO, BaO, ZnO, Al₂O₃, Fe₂O₃, Se, TiO₂, CoO, MnO, Cr₂O₃, CeO₂, ZrO₂, NiO, SnO₂, Cu₂O, V₂O₅ and SO₃.

In still another embodiment, the concentrated raw material component may have as well comprised a mixture in any number and proportions of sintered materials and glasses of previous embodiments. For example, the concentrated raw material component may have comprised a mixture of at least two different sintered materials previously described. In another embodiment, it may have comprised at least two different glasses previously described, or in still another embodiment a mixture of at least one of those sintered materials with at least one of those glasses. In each of those mixtures, the content of each sintered material and/or glass may have approached zero, hundred percent of the mixture, or any percentage in-between.

As already written above, a third aspect of the invention is also to supply a method of reducing Se burn off in a Se comprising glass making process, according to Claim 11.

In step a) of that method relating to the grinding of the Se and Fe sources into particles, separate grinders for the Se source, the Fe source and for the carrier may be used. Grinders of the same technology may be used or not, depending of the nature, size and stiffness of the particular materials entering the mixers. Alternatively, whenever the stiffness of both Se and Fe sources are approximately in the same order of magnitude, it is possible to grind Se and Fe sources together in one single grinder. Mean particle size targets need not be exactly the same for both sources. Generally, particle size of the carrier particles is about one order of magnitude higher than those of the Se and Fe sources. Step a) may also just be cancelled or part cancelled, every time the carrier and/or Se and Fe sources come already under suitable particle size forms.

In step b) relating to the mixing of the Se particle source, Fe particle source and the carrier particle, the mixing may be eased with the admixing of a small quantity of water. However, this quantity must generally not exceed 3 to 6 % of the total weight of the concentrated component. Relative proportions of the sources have to be adjusted taking into account the compositional formula of the targeted final glass together with the amounts of Se, Fe and the compounds constituting the carrier, which are already present in the glass batch composition. The aim is to reach the targeted composition after melting the concentrated component with the glass batch.

In step c), temperature is adjusted for simply sinter the mixture of Se and Fe particles onto the surface of the carrier, or to melt completely the latter in a glass for encapsulation of the Se and Fe particles. Duration of the mixing at temperature has to be adjusted accordingly as well.

Steps a) to d), related to the preparation of the concentrated component, may be performed off line on a different site than the glass factory and the concentrated component may be stored for future uses.

Step e) may be realised with the aid of normal dosing equipment used for the preparation of the batch before its introduction in the melting glass, by the feeding raw materials flows at the entry of the glass furnace. If needed, there is however no problem to introduce the concentrated component alone, by a special conduit next to the normal raw materials inflow.

Generally, in step f), mixing of the concentrated component occurs directly in the melt state in the glass furnace, at the same time of the other components. If needed, however, a forced mixing may always be performed to help at the dispersing of the melt constituents from the concentrated component in the whole melt glass batch.

Specific words defined above for the concentrated component have here the same meaning as well for the method.

Particular embodiments related to the nature and compositions of the concentrated component detailed above apply as well in the method according to the invention.

The invention also relates to a soda lime glass comprising Se that has been manufactured by the method described above. The soda lime glass may as well have been manufactured according to at least one of the particular embodiments of that method.

In a preferred embodiment, the soda lime glass comprising Se is a flat glass.

In another preferred embodiment, the soda lime glass comprising Se is a float glass that has been manufactured by the method described above, or by at least one of its embodiments. In step f) of those methods, a ribbon of molten glass has been floated on the upper surface of a bath of molten metal tin.

Preferably, the flat glass comprising Se is the float glass described above. It may also be, alternatively, any other type of glass obtained by the method according to the invention, including, non-limitatively: cast glass, drawn glass and blown cylinder glass.

The following examples are only given in order to illustrate the invention and do by no means limit that invention to what they are specifically disclosing.

### Examples

### 1. Addition of Rouge to a glass batch comprising Se (non compliant with the invention)

Varying quantities of Fe₂O₃ under the form of Rouge have been added to a Se containing glass batch composed of the following compounds:

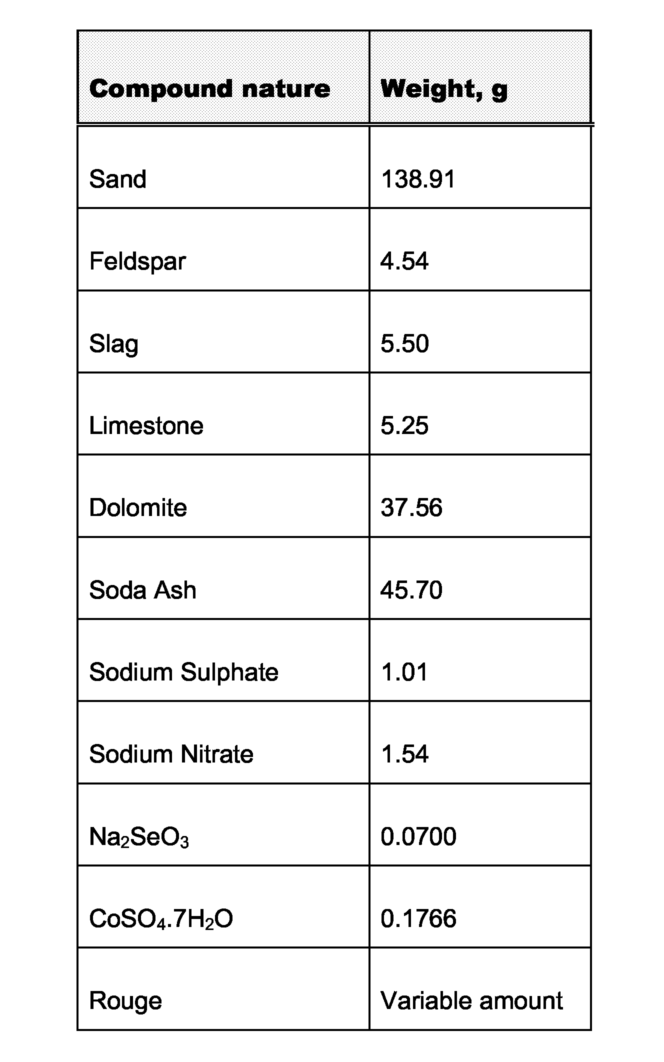

The batch has been melted and transformed into a glass. By measuring the Se content in the glass obtained, a yield in Se has been computed as equal to 100 times the weight percentage of Se in the glass produced divided by the weight percentage of Se present in the batch composition before melting.

The results obtained were as follows:

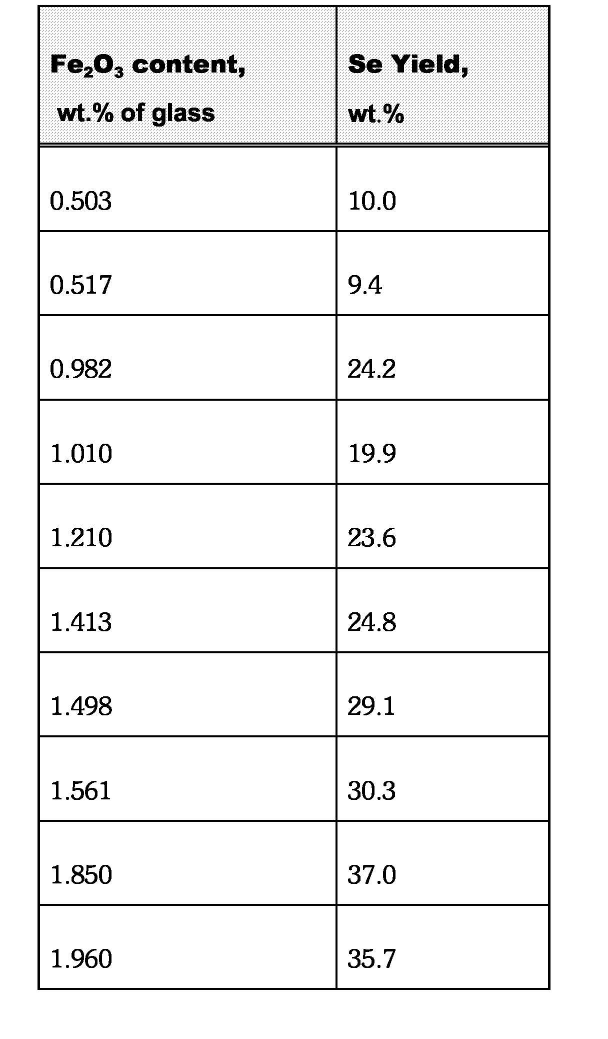

The results show a clear trend of improvement of the Se yield as the iron content in the batch composition increases.

### 2. Preparation of concentrated raw material components (according to the invention)

Three raw material components have been prepared at a laboratory scale by melting beyond 1200 °C for 8 hours a mixture of the following components and allowing them to cool down into a glass:

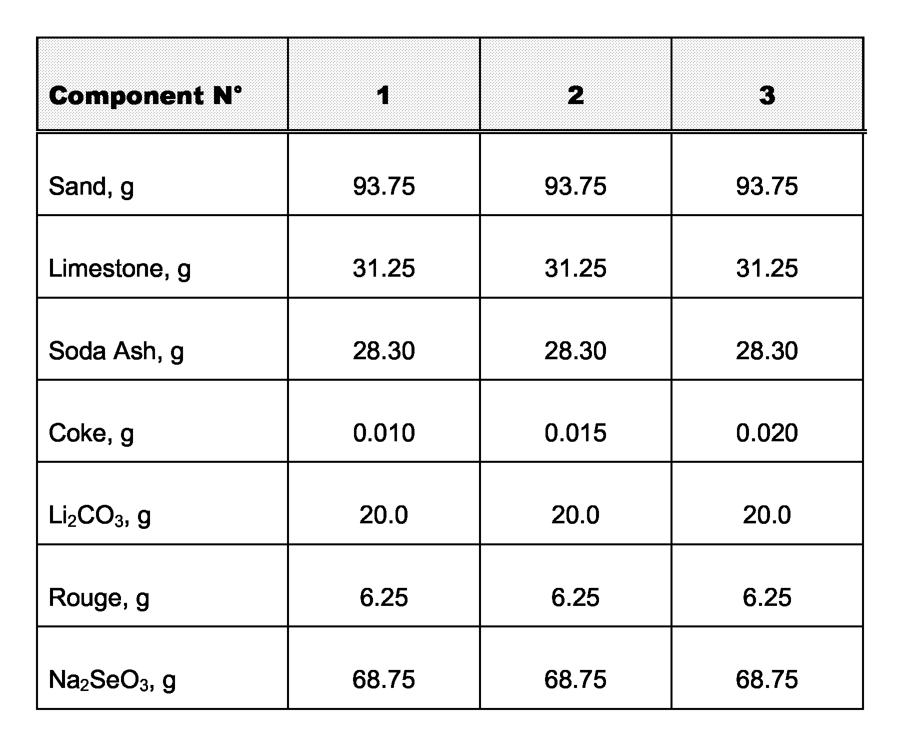

The composition of the three glasses obtained has been analysed by X ray fluorescence and has given the following results:

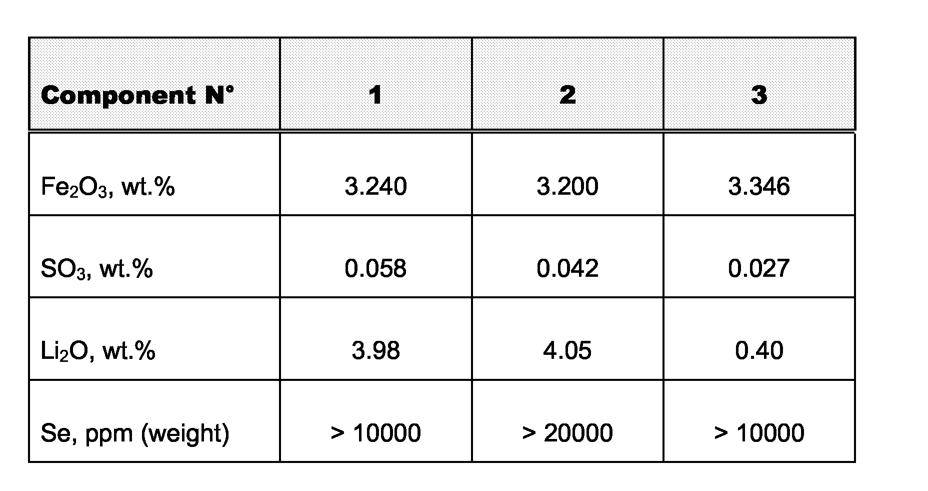

## Claims

1. A concentrated raw material component for the preparation of a glass, the component comprising a source of Se, **characterised in that** the concentrated raw material component comprises at least 0.1 wt. % of an Fe source (expressed as Fe₂O₃), at least 0.030 wt.% of an Se source (expressed as Se) and **in that** the Se and Fe sources have been combined in the component with a solid carrier.

2. The concentrated raw material component of Claim 1, **characterised in that** the Fe and Se sources have been combined with the solid carrier in a sintered material.

3. The concentrated raw material component of Claim 1, **characterised in that** the Fe and Se sources have been combined with the solid carrier in a glass, which encapsulates the Se and Fe sources.

4. The concentrated raw material component of Claim 1, **characterised in that** it comprises a mixture in any number and proportions of sintered materials of Claim 2 and glasses of Claim 3.

5. The concentrated raw material component according to any one of Claims 1 to 4, **characterised in that** the solid carrier comprises at least one of the following compounds: SiO₂, Na₂O, K₂O, Li₂O, B₂O₃, CaO, MgO, BaO, ZnO, Al₂O₃, Fe₂O₃, Se, TiO₂, CoO, MnO, Cr₂O₃, CeO₂, ZrO₂, NiO, SnO₂, Cu₂O, V₂O₅ and SO₃.

6. The concentrated raw material component according to any one of Claims 1 to 5, **characterised in that** the Se source is selected from solid particles comprising at least one of the following compounds: elemental Se, a Se salt at varied Se oxidation stages and the compound FeSe.

7. The concentrated raw material component according to Claim 6, **characterised in that** the Se source consists of salt particles of Na₂SeO₃.

8. The concentrated raw material component according to anyone of Claims 1 to 7, **characterised in that** the Fe source is selected from solid particles comprising at least one of the following compounds: Fe₂O₃ (Rouge) and a salt of Fe at varied oxidation stages.

9. The concentrated raw material component according to Claim 8, **characterised in that** the Fe source consists essentially of Fe₂O₃ (Rouge).

10. A Se comprising glass wherein at least 50 wt. % of the Se present in its composition has come from a concentrated raw material component comprising a source of Se and a source of Fe that have been combined with a solid carrier.

11. A method of reducing Se burn off in a Se comprising glass making process by melting a glass batch composition followed by forming the molten glass into a desired shape, **characterised in that** it comprises the steps of:
a) grinding into particles a Se source, a Fe source and a solid carrier material;
b) mixing particles of Se source and particles of Fe source with particles of the solid carrier material in a dry mixer in proportions required for the obtainment of a concentrated raw material that can subsequently be used in the manufacture of the targeted final Se comprising glass;
c) heating the mixture under stirring in a furnace up to a temperature at least able to sinter the mixture into a solid concentrated component and allowing that component to cool down;
d) regrinding the solid concentrated component obtained at the previous step up to a particle size allowing an easy and homogeneous mixture with other traditional particle components required for obtaining the targeted final Se comprising glass;
e) incorporating the grinded solid concentrated component into the glass batch composition, reduced in Se and Fe content;
f) mixing the grinded solid concentrated component with the glass batch, melting the mixture in a glass furnace and processing it for the obtainment of the glass.

12. The method of Claim 11, **characterised in that** particles of the Se source are selected from solid particles comprising at least one of the following compounds: elemental Se, a Se salt at varied Se oxidation stages and the compound FeSe.

13. The method of Claim 12, **characterised in that** particles of the Se source consist of salt particles of Na₂SeO₃.

14. The method of any one of Claims 11 to 13, **characterised in that** the Fe and Se sources are combined with the solid carrier in a sintered material.

15. The method of any one of Claims 11 to 14, **characterised in that** the Fe and Se sources are combined with the solid carrier in a glass, which encapsulates the Se and Fe sources.

16. The method of any one of Claims 11 to 15, **characterised in that** the solid concentrated component is a mixture in any number and proportions of sintered materials of Claim 14 and glasses of Claim 15.

17. The method of any one of Claims 11 to 16, **characterised in that** the solid carrier comprises at least one of the following compounds: SiO₂, Na₂O, K₂O, Li₂O, B₂O₃, CaO, MgO, BaO, ZnO, Al₂O₃, Fe₂O₃, Se, TiO₂, CoO, MnO, Cr₂O₃, CeO₂, ZrO₂, NiO, SnO₂, Cu₂O, V₂O₅ and SO₃.

18. The method of any one of Claims 11 to 17, **characterised in that** the Fe source is selected from solid particles comprising at least one of the following compounds: Fe₂O₃ (Rouge) and any salt of Fe at varied oxidation stages.

19. The method of Claim 18, **characterised in that** the Fe source consists of Fe₂O₃ (Rouge).

20. The method of any one of Claims 11 to 19, **characterised in that** at least 50 % of the weight of the Se present in final glass composition originates from a solid concentrated component according to claim 11 c).

21. A method of increasing the Se yield in the manufacture of a Se comprising glass by melting of a batch composition in which at least 50 % of the weight of the Se introduced in the batch is under the form of a concentrated raw material component that comprises a source of Fe and a source of Se combined with a solid carrier.

22. A method of manufacturing a Se comprising glass having a content in Se of at least 0.1 wt.% comprising the incorporation in a glass batch of reduced content in Fe and Se of a concentrated raw material component that comprises a source of Fe and a source of Se combined with a solid carrier.

23. A high Se glass batch composition, in which at least 50 % of the weight of the Se is present under the form of a concentrated raw material component that comprises a source of Fe and a source of Se, combined with a solid carrier.

24. A soda lime glass comprising Se, which has been manufactured by any one of the methods of Claim 11 to 22.

25. The soda lime glass of Claim 24 **characterised in that** it is a flat glass.

26. A float glass comprising Se, **characterised in that** it has been manufactured according to any one of Claims 11 to 22 and wherein the processing of step f) comprises floating a ribbon of molten glass on the upper surface of a bath of molten metal tin.

27. A flat glass comprising Se **characterised in that** it is the float glass of claim 26.
